# EUROPEAN PATENT SPECIFICATION

(11) **EP 2 738 206 B1**
(45) Date of publication and mention of the grant of the patent: **18.01.2017**
(21) Application number: 13194752.5
(22) Date of filing: 28.11.2013
(51) Int. Cl.: C08L 7/00, C08L 9/00

(54) **Rubber composition containing sulfur curative and pentaerythritol ester of carboxylic acid**
Kautschukzusammensetzung enthaltend Schwefel und Pentaerythrit-Ester von Carbonsäuren
Composition de caoutchouc contenant du soufre et ester de pentaérythritol d'acide carboxylique

(30) Priority: 29.11.2012 US 201213688271
(43) Date of publication of application: 04.06.2014
(73) Proprietor: The Goodyear Tire & Rubber Company, Akron, Ohio 44316 (US)
(72) Inventor: Sandstrom, Paul Harry, Cuyahoga Falls, OH Ohio 44223 (US)
(74) Representative: Kutsch, Bernd

(56) References cited:
- EP-A1- 1 227 125
- EP-A2- 1 241 213
- US-A- 4 788 241
- US-A- 5 736 611

## Description

### Field of the Invention

The invention relates to a wire embedded in a rubber composition and to a tire comprising such a wire embedded in a rubber composition.

### Background of the Invention

Use of rubber compositions which contain high levels of sulfur content, particularly as composites containing wire reinforcement, and use for example as a tire component, have historically presented a challenge relating to migration of the sulfur to the surface of the uncured rubber compositions, commonly referred to as "bloom", or "sulfur bloom" which causes a decrease of building tack at the surface of the uncured rubber composition.

For example, rubber compositions containing high sulfur levels can promote such sulfur bloom on the surface of the unvulcanized rubber. This surface layer of sulfur crystallizes with an attendant loss of building tack which can cause a challenge in adhering an assembly of uncured rubber tire components together such as would be experienced in tire building.

Various modifications of standard rubber processing techniques have been utilized in an attempt to minimize the sulfur bloom tendencies. Such prior methodologies have included, for example, use of insoluble sulfur in the rubber composition, limiting the compound mixing temperatures during the sulfur addition to the rubber composition; and minimizing the heat history (the time that the rubber composition is exposed to elevated temperatures) for the rubber composition during its processing. However, these modifications have led to mixed results.

For example, insoluble sulfur is formed by rapidly quenching molten sulfur that is above 159°C (usually in a range of from 200°C to 250°C), and is composed primarily of long chain sulfur molecules and a lesser amount of shorter soluble S₈ rings. But there is a tendency for the long chain sulfur molecules to revert to the more stable soluble form if exposed to higher temperatures, long storage times, and/or hostile storage environments. To reduce this tendency, commercial insoluble sulfur products contain a stabilizer.

When insoluble sulfur is mixed in a rubber composition, or compound, it exists as more or less discreet particles of varying size in the rubber phase. However, above 118°C, and mixing of sulfur containing rubber compo sitions is usually administered well above such temperature, substantial reversion to the soluble sulfur form occurs, thereby resulting in sulfur bloom as a portion of the soluble sulfur tends to migrate to the surface of the rubber composition.

Another approach to the sulfur bloom challenge has been to use a low-sulfur containing rubber compound. Low-sulfur containing rubber compounds may be obtained by use of suitable sulfur vulcanizing agents, for example, elemental sulfur (free sulfur), optionally in combination with a sulfur donating vulcanizing agent, for example, an amine disulfide, polymeric polysulfide, or sulfur olefin adducts. However, with this approach, adhesion of the rubber compound to reinforcement such as steel wire, steel cord, particularly brass coated steel wire or cord, or the like may be compromised.

Accordingly, there is a need for a rubber composition in which sulfur bloom, and the resulting loss of surface tack, is reduced, or avoided over a wider temperature range, without compromising adhesion, or building tack, of the uncured rubber compound to a reinforcement material such as, for example, wire reinforcement.

In the description of this invention, the terms "compounded" rubber compositions and "compounds", where used, refer to the respective rubber compositions which have been compounded with appropriate compounding ingredients such as, for example, carbon black, oil, stearic acid, zinc oxide, silica, wax, antidegradants, resin(s), sulfur and accelerator(s) which may include silica and silica coupler where appropriate. The terms "rubber" and "elastomer" may be used interchangeably as well as the terms "cure" and "vulcanize" and "uncured" and "unvulcanized" unless otherwise indicated. The amounts of materials are usually expressed in parts of material per 100 parts of rubber polymer by weight (phr).

US-A- 4,788,241 describes a tire tread rubber composition comprising styrenebutadiene rubber, sulfur, pentaerythritol and tetra-stearate.

US-A- 5,736,611, EP-A- 1 241 213 and EP-A- 1 227 125 each describe a rubber compositions for use in a tire tread comprising sulfur and pentaerythritol esters of carboxylic acid.

### Summary and Practice of the Invention

The invention relates to a wire embedded in a rubber composition in accordance with claim 1 and to a tire in accordance with claim 15.

Dependent claims refer to preferred embodiments of the invention.

It has been observed that the above-mentioned sulfur bloom challenges for a high sulfur containing uncured rubber composition is retarded by the present invention and an attendant loss of building tack to thereby promote adhesion, for example, between the uncured rubber composition and metal (e.g. wire) reinforcement material, particularly brass coated steel wire.

In accordance with this invention, the uncured rubber composition comprises, based on parts by weight per 100 parts by weight rubber (phr):
(A) at least one diene based elastomer comprising at least one of natural cis 1,4-polyisoprene rubber and synthetic rubber derived from one or more diene hydrocarbon monomers, and mixtures thereof;
(B) 0.1 to 10, alternately from 2 to 8, phr of at least one of insoluble and soluble sulfur, and
(C) 1 to 10, alternately from 0.5 to 3, phr of pentaerythritol ester of carboxylic acid comprising at least one of stearic, palmitic, butyric, lauric, oleic and lineolic acids.

In accordance with a preferred aspect of this invention, said uncured rubber composition contains a reinforcing filler comprising:
(A) silica or precipitated silica, or
(B) rubber reinforcing carbon black, or
(C) combination of silica or precipitated silica and rubber reinforcing carbon black containing up to 95 weight percent silica.

In additional accordance with this invention, a tire is provided having a component, particularly a sulfur cured component, comprising a wire embedded in said rubber composition.

In further accordance with this invention, said rubber composition contains brass coated steel embedded in said rubber composition. Therefore, a composite of wire reinforced rubber composition is provided comprising brass coated steel wire embedded in said rubber composition.

The pentaerythritol ester used in the present invention may be added to the rubber by any conventional technique, such as in an internal rubber mixer or on an open a mill, preferably in an internal rubber mixer. The amount of pentaerythritol ester in the rubber composition may vary widely depending on the choice of pentaerythritol ester, type of rubber and other compounds present in the sulfur vulcanizable rubber composition containing diene-based elastomers. As indicated, the amount of pentaerythritol ester may be used in a range of, for example, from 0.1 to 10, alternately from 0.5 to 3, phr, depending somewhat upon the level of insoluble sulfur or soluble sulfur or combination of the two types of sulfurs used in the rubber composition.

The pentaerythritol ester may be, for example, pentaerythritol esterified with a carboxylic fatty acid derived or contained in an animal or vegetable fat or oil typically composed of a chain of alkyl, or alkylene, groups containing from 4 to 22 carbon atoms (usually an even number of carbon atoms) and containing a characteristic terminal carboxyl radical (namely a-COOH radical). Such carboxylic fatty acid comprises at least one of saturated or unsaturated carboxylic fatty acids comprising at least one of stearic, palmitic, butyric, lauric, oleic and lineolic acids.

Such pentaerythritol esters, for example, comprise at least one of pentaerythritol mono, di, tri and tetra esters, exemplary of which are, for example, pentaerythritol monostearate, pentaerythritol distearate, pentaerythritol tristearate and pentaerythritol tetrastearate.

A significant aspect of the invention is the ability to use high levels of sulfur in rubber compounds in which high sulfur levels are desired to provide high compound stiffness properties or for adhesion to wire reinforcement, particularly brass coated steel wires or cables of a plurality of wires.

This is considered herein to be significant in a sense of being able to use current levels of sulfur curative with reduced impact on sulfur bloom to the surface of the rubber compounds and in some cases be able to go to higher levels of sulfur in the rubber compound that would not be practical to use with current insoluble sulfur cure systems. Also, because soluble sulfur is significantly less costly than insoluble sulfur, an opportunity to replace insoluble sulfur with soluble sulfur in some rubber compounds could provide a cost reduction for the rubber compounds that currently require the use of only insoluble sulfur.

In the practice of this invention, the rubber composition may comprise various conjugated diene-based elastomers. Such diene-based elastomers may comprise, for example, at least one of polymers comprising at least one of isoprene and 1,3-butadiene, and copolymers of styrene and at least one conjugated diene hydrocarbon comprising isoprene and 1,3-butadiene.

It is preferred that the rubber composition is exclusive of butyl-type rubbers, particularly isobutylene/diene based rubbers. Such rubbers include butyl rubber and halogenated butyl rubbers.

For example, representative of such elastomers are natural cis 1,4-polyisoprene rubber, synthetic cis 1,4-polyisoprene rubber, cis 1,4-polybutadiene rubber, high vinyl polybutadiene rubber having a vinyl 1,2 content in a range of 10 percent to 90 percent, styrene/butadiene copolymer (SBR) rubber (aqueous emulsion or organic solution polymerization prepared copolymers) and including organic solvent polymerization prepared SBR having a vinyl 1,2- content in a range of 10 to 90 percent based on its polybutadiene derived portion and a polystyrene content in a range of 10 to 60 percent based upon the copolymer, styrene/high trans 1,4-butadiene copolymer rubber having a trans-1,4 content in the range of 40 to 80 percent based on its polybutadiene derived portion, styrene/isoprene/butadiene terpolymer rubber, butadiene/acrylonitrile rubber, styrene/isoprene copolymer and isoprene/butadiene copolymer rubber, 3,4-polyisoprene rubber, trans 1,4-polybutadiene rubber and trans 1,4-polyisoprene rubber.

Further representative examples of such elastomers are, for example, organic solution polymerization prepared tin or silicon coupled elastomers such as for example, tin or silicon coupled styrene/butadiene copolymers. Examples of such coupled, elastomers may be, for example, styrene/butadiene copolymer elastomers exemplified for example in US-A-5,064,901.

Conventional rubber additives may be incorporated in the rubber composition.

Such additives commonly used in rubber compositions, or stocks, include fillers, plasticizers, waxes, processing oils, retarders, antiozonants, antioxidants, and the like. If desired, the total amount of filler that may be used may range from 30 to 150 phr, often in a range of 45 to 100 phr. Examples of fillers include clays, calcium carbonate, calcium silicate, titanium dioxide, rubber reinforcing fillers such as rubber reinforcing carbon black and precipitated silica. Representatives rubber reinforcing carbon blacks are, for example and not intended to be limiting include those with ASTM designations of N-326, N-330, N-472, N-550, N-660, N-754, N-762, N-765 and N-990. Plasticizers are sometimes used in amounts ranging from, for example, 2 to 50, alternately from 5 to 30, phr. Representative of various plasticizers are, for example, aromatic extract oils, petroleum softeners including asphaltenes, pentachlorophenol, saturated and unsaturated hydrocarbons and nitrogen bases, coal tar products, and cumarone-indene resins and esters such as dibutylphthalate and tricresol phosphate. Common waxes which may be used include paraffinic waxes and microcrystalline blends. Such waxes, when used, might be used in amounts ranging, for example, from 0.5 to 3 phr.

If desired, siliceous pigments may be used in the rubber compound applications of the present invention, including pyrogenic and precipitated siliceous pigments (silica). The siliceous pigments advantageously employed in this invention are precipitated silicas such as, for example, those obtained by the acidification of a soluble silicate, e.g., sodium silicate. Such silicas may be characterized, for example, by having a BET surface area, as measured using nitrogen gas, in the range of 40 to 600 m²/g, and more usually in a range of 50 to 300 m²/g. The BET method of measuring surface area is described in the Journal of the American Chemical Society, Volume 60, Page 304 (1930). The silica may also be typically characterized by having a dibutylphthalate (DBP) absorption value in a range of 100 to 400, and more usually 150 to 300 cc/100g. Various commercially available silicas may be used, for example: silicas commercially available from PPG Industries under the Hi-Sil™ trademark with designations 210 and 243; silicas available from Rhodia with, for example, designations of Z1165MP™ and Z165GR™.

Vulcanization of the rubber compositions of the present invention is generally carried out at conventional temperatures ranging from 100°C to 200°C.

Advantageously, the vulcanization is conducted at temperatures ranging from 110°C to 180°C. Any of the usual vulcanization processes may be used, for example, heating in a press or mold, heating with superheated steam or hot air, or heating in a salt bath.

Accelerators are used to control the time and/or temperature required for vulcanization, and to improve the properties of the vulcanizate. In one embodiment, a single accelerator system may be used, i.e., primary accelerator. The primary accelerator(s) may be used in total amounts ranging from 0.5 to 4, advantageously from 0.8 to 1.5, phr. In another embodiment, combinations of a primary and a secondary accelerator may be used, with the secondary accelerator being used in smaller amounts (of 0.05 to 3 phr), in order to activate and to improve the properties of the vulcanizate. In addition, delayed-action accelerators may be used. Such accelerators typically are not affected by normal processing temperatures, and produce a satisfactory cure at ordinary vulcanization temperatures. Vulcanization retarders may also be used. Suitable types of accelerators that may be used in the present invention are amines, disulfides, guanidines, thioureas, thiazoles, thiurams, sulfenamides, dithiocarbamates, and xanthates. Advantageously, the primary accelerator is a sulfenamide. If a second accelerator is used, the secondary accelerator advantageously may be a guanidine, dithiocarbamate, or thiuram compound.

When a rubber compound of the present invention is used as a wire coat or bead (bundles of wires) coat for use in a tire, the compound may also contain an organo-cobalt compound which may further promote wire adhesion of the sulfur cured rubber composition. Representative of such cobalt compounds are, for example, cobalt salts of fatty acids such as stearic, palmitic, oleic and linoleic; cobalt salts of aliphatic or alicyclic carboxylic acids having from 6 to 30 carbon atoms, representative of which are; cobalt naphthenate and cobalt stearate.

The mixing of the rubber compound may be accomplished by methods known to those having skill in the rubber mixing art. For example, the ingredients are typically mixed in at least one preparatory mixing stage, preferably in an internal rubber mixer, (conventionally referred to as a non-productive mixing stage or stages) followed by a mixing stage where a curative, such as sulfur, is mixed (conventionally referred to as a productive mixing stage), also preferably in an internal rubber mixer. The final curatives are typically mixed in the final productive stage in which the mixing typically occurs at a temperature, or ultimate temperature, lower than the mix temperature(s) of the preceding non-productive mix stage(s).

The pentaerythritol ester may be mixed in one or more non-productive mix stages or in the productive mix stage. The sulfur is mixed in the productive mix stage.

The rubber composition is used for embedding a wire in the rubber composition. Pneumatic tires may be built, shaped, molded, and cured by various methods which are known to those having skill in the art which have a component comprising such wire reinforced rubber composition. If desired, one or more of the rubber compositions may be used as wire coat, or bead coat. As will be appreciated, the tire may be a passenger tire, aircraft tire and truck tire.

The following Examples are provided to further illustrate the invention with the parts and percentages being based on weight (e.g. phr) unless otherwise indicated.

### EXAMPLE I - Use of Insoluble Sulfur Curative

Rubber compositions (rubber Samples), which contained a reinforcing resin, were prepared to evaluate inclusion of pentaerythitol and pentaerythitol esters in a rubber composition such as might be suitable for use as a wire coat rubber composition, using insoluble sulfur curative, to evaluate their effect on uncured rubber tack behavior, cured rubber physical properties and wire adhesion.

The rubber compositions were prepared by mixing natural and synthetic cis 1,4-polyisoprene rubber with carbon black in a first non-productive mixing step, or stage, (NP1) in an internal rubber mixer for 4 minutes to a temperature of 160°C. The resulting rubber mixtures were subsequently mixed in a second sequential non-productive mixing stage (NP2) to a temperature of 160°C with no additional ingredients being added. The rubber compositions were subsequently mixed in an internal rubber mixer with a sulfur cure package, namely insoluble sulfur and sulfur cure accelerator(s). The rubber compositions were allowed to cool to below 40°C between each individual mixing stage.

The basic formulation for the rubber Samples is illustrated in the following Table 1 and expressed in terms of parts by weight per hundred parts by weight rubber (phr) unless otherwise indicated.

**Table 1**

| Non-Productive Mixing Stage (NP1) | phr |
|---|---|
| Natural (cis 1,4-polyisoprene) rubber | 75 |
| Synthetic (cis 1,4-polyisoprene) rubber¹ | 25 |
| Rubber reinforcing carbon black² | 60 |
| Precipitated silica³ | 5 |
| Zinc oxide | 7 |
| Fatty acid⁴ | 3 |
| Antidegradant(s) | 2 |
| Rubber processing oil | 2 |
| Cobalt salt ⁵ | 0.5 |
| Pentaerythitol | 0 and 1.5 |
| Pentaerythitol esters⁶ | 0 and 1.5 |
| | |

| Productive Mixing Stage (P) | |
|---|---|
| Insoluble sulfur or soluble sulfur⁷ | 5 or 4 |
| | as indicated |
| Sulfur cure accelerator(s)⁸ | 1.3 |
| Methylene acceptor and methylene donor resin blend⁹ | 7 |

| | |
|---|---|
| ¹synthetic cis 1,4-polyisoprene rubber as NAT2200 from The Goodyear Tire & Rubber Company ²N326, an ASTM designation ³Precipitated silica as Zeosil Z1165 MP from Rhodia ⁴Fatty acid comprising stearic, palmitic and oleic acids ⁵Cobalt naphthenate ⁶Pentaerythitol mono-, di-, tri-, and tetra- stearates ⁷Insoluble sulfur as Crystex from the Flexsys; soluble sulfur as rubber makers sulfur from Holly Industries ⁸Sulfur cure accelerator(s) as sulfenamides ⁹methylene acceptor as a reactive phenol/formaldehyde resin as HRJ-15873™ from SI Group, methylene donor as hexamethoxymethylmelamine resin as Cyrez CRA100™ from Cyrez | |

Various physical properties of the rubber compositions (Samples) are reported in the following Table 2.

**Table 2**

| | Samples | | | | | |
|---|---|---|---|---|---|---|
| | Control | Comparative | | Experimental | | |
| | A | B | C | D | E | F |
| Insoluble sulfur | 5 | 5 | 5 | 5 | 5 | 5 |
| Pentaerythitol | 0 | 1.5 | 0 | 0 | 0 | 0 |
| Pentaerythitol mono-stearate | 0 | 0 | 1.5 | 0 | 0 | 0 |
| Pentaerythitol di-stearate | 0 | 0 | 0 | 1.5 | 0 | 0 |
| Pentaerythitol tri-stearate | 0 | 0 | 0 | 0 | 1.5 | 0 |
| Pentaerythitol tetra-stearate | 0 | 0 | 0 | 0 | 0 | 1.5 |
| | | | | | | |
| Tack Strength¹, (N) | | | | | | |
| Original (23°C) | 17.4 | 19.7 | 19.3 | 18.1 | 19.9 | 20.8 |
| Aged 1 day in air at 23°C | 6.4 | 7 | 20.6 | 15.2 | 15 | 17.4 |
| Aged 3 days in air at 23°C | 5.3 | 6.1 | 11.5 | 8 | 6.7 | 18.1 |
| Aged 5 days in air at 23°C | 3.9 | 3.9 | 12.4 | 7.6 | 6.1 | 13.8 |
| | | | | | | |
| RPA | | | | | | |
| Uncured rubber composition storage modulus, (G') 100°C, 1 Hz, kPa | 289 | 301 | 291 | 284 | 286 | 294 |
| Cured rubber storage modulus (G'), 100°C, 10Hz, (kPa) G' at 10% strain | 3942 | 4094 | 4102 | 4106 | 3907 | 4175 |
| Tan delta, 100°C, 10% strain | 0.23 | 0.24 | 0.24 | 0.24 | 0.23 | 0.23 |
| | | | | | | |
| Curing Information | | | | | | |
| Delta torque (dNm) | 41 | 45 | 42 | 43 | 40 | 43 |
| T90, minutes | 25 | 27 | 26 | 27 | 26 | 26 |
| | | | | | | |
| Physical Properties | | | | | | |
| Tensile strength (MPa) | 19.1 | 19.1 | 19.2 | 10 | 19.6 | 19.4 |
| Ultimate elongation (%) | 400 | 386 | 409 | 423 | 430 | 405 |
| 100% modulus, ring, (kPa) | 15.5 | 16.1 | 15.2 | 15.3 | 14.6 | 15.6 |
| Shore A hardness, 100°C | 80 | 79 | 79 | 81 | 82 | 80 |
| Rebound, hot, 100°C | 52 | 52 | 51 | 52 | 51 | 53 |
| Tear strength², 95°C, (N) | 55 | 73 | 58 | 70 | 65 | 62 |
| | | | | | | |
| Wire Cord Adhesion (SWAT)³, (N) | | | | | | |
| Original, 23°C | 704 | 626 | 726 | 700 | 694 | 710 |
| Aged 10 days in water at 90°C | 749 | 805 | 639 | 608 | 600 | 633 |
| Aged 10 days in nitrogen at 120°C | 768 | 731 | 800 | 748 | 764 | 800 |

| | | | | | | |
|---|---|---|---|---|---|---|
| ¹Tack strength according to a positive pressure tack test for interfacial tack between two uncured rubber samples by pulling apart two uncured rubber samples at ambient room temperature (e.g. 23°C) which had been pressed together with a pressure of 0.2 MPa (30 psi) for 30 seconds following which the pressure is released. The force to pull the samples apart is measured in terms of Newtons (N) force. ²Data according to a tear strength (peal adhesion) test to determine interfacial adhesion between two samples of a rubber composition. Such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. ³Standard wire and textile cord adhesion test (SWAT) conducted by embedding brass coated wire cord in the rubber composition. The rubber/cord samples were then cured at the indicated temperatures. The respective cords in the rubber samples were subjected to a pull-out test according to ASTM D2229-73. The results of the pull-out tests are expressed in Newtons. The wire cord was a brass coated steel wire. | | | | | | |

From Table 2 it can be seen that the original tack before aging had high values for all uncured rubber Samples of this study. However, after aging, the uncured Control rubber Sample A exhibited a large decrease in tack performance, even after one day of aging in the air at 23°C.

Comparative rubber Sample B containing the pentaerythritol also exhibited similar tack loss as Control rubber Sample A after aging in the air at 23°C.

However, it was discovered that all of the uncured insoluble sulfur based Experimental rubber Samples C through F containing the pentaerythritol esters provided not only excellent original tack, similar to the control rubber Sample A, but exhibited superior tack performance after aging.

For the Experimental rubber Samples, it is observed that the mono-stearate ester (Experimental rubber Sample C) and the tetra-stearate ester, (Experimental rubber Sample F) exhibited the best tack retention after aging.

These results of the evaluation are considered as being significant in a sense that the Experimental rubber compositions (Experimental rubber Samples) of this study containing the pentaerythritol esters would predictively substantially maintain their original tack property over a longer period of time following their formation through subsequent rubber processing such as by, for example, calendering or extrusion process to form a tire component prior to building a resultant component into a tire assembly. This will beneficially allow more flexibility in the tire component preparation and the tire building process in the tire plant.

From Table 2 it can also be seen that most of the cured properties of the Experimental rubber Samples containing the pentaerythritol esters showed little change in significant rubber physical properties and that an inclusion of the penataerythritol itself gave no benefit in tack retention performance for the uncured rubber composition.

### EXAMPLE II - Use of Soluble Sulfur Curative

Rubber compositions (rubber Samples), which contained a reinforcing resin, were prepared in the manner of Example I, except that soluble sulfur curative, instead of insoluble sulfur curative, was used, to evaluate the effect of the inclusion of pentaerythitol and pentaerythitol esters in the rubber composition on uncured rubber tack behavior, cured rubber physical properties and wire adhesion.

Soluble sulfur normally has a tendency to migrate within an uncured rubber composition to create a bloom on the surface of the uncured rubber composition and to thereby reduce building tack of the uncured rubber composition.

The basic formulation for the rubber Samples is illustrated in Table 1 of Example I except for use of the soluble sulfur for this Example II as a replacement for the insoluble sulfur.

Various physical properties of the rubber compositions (Samples) are reported in the following Table 3.

**Table 3**

| | Samples | | | | | |
|---|---|---|---|---|---|---|
| | Control | Comparative | | Experimental | | |
| | G | H | I | J | K | L |
| Soluble sulfur | 4 | 4 | 4 | 4 | 4 | 4 |
| Pentaerythitol | 0 | 1.5 | 0 | 0 | 0 | 0 |
| Pentaerythitol mono-stearate | 0 | 0 | 1.5 | 0 | 0 | 0 |
| Pentaerythitol di-stearate | 0 | 0 | 0 | 1.5 | 0 | 0 |
| Pentaerythitol tri-stearate | 0 | 0 | 0 | 0 | 1.5 | 0 |
| Pentaerythitol tetra-stearate | 0 | 0 | 0 | 0 | 0 | 1.5 |
| | | | | | | |
| Tack Strength¹, (N) | | | | | | |
| Original (23°C) | 23.6 | 21.6 | 21.3 | 16.7 | 21.7 | 19.8 |
| Aged 1 day in air at 23°C | 5.5 | 5.5 | 9.6 | 12.9 | 6.8 | 6.3 |
| Aged 3 days in air at 23°C | 4.9 | 3.5 | 10.3 | 17.8 | 6.6 | 7.9 |
| Aged 5 days in air at 23°C | 3.6 | 4.1 | 10 | 12.8 | 6.3 | 7.0 |
| | | | | | | |
| RPA | | | | | | |
| Uncured rubber composition storage modulus, (G') 100°C, 1 Hz, kPa | 259 | 271 | 244 | 252 | 245 | 253 |
| Cured rubber storage modulus (G'), 100°C, 10Hz, (kPa) G' at 10% strain | 4048 | 3791 | 3978 | 4057 | 3945 | 4024 |
| Tan delta, 100°C, 10% strain | 0.27 | 0.28 | 0.28 | 0.28 | 0.28 | 0.28 |
| | | | | | | |
| Curing Information | | | | | | |
| Delta torque (dNm) | 46 | 44 | 45 | 45 | 45 | 46 |
| T90 (minutes) | 27.6 | 26.4 | 28 | 27.9 | 28.3 | 27.8 |
| | | | | | | |
| Physical Properties | | | | | | |
| Tensile strength (MPa) | 18.3 | 17.7 | 18.4 | 18.6 | 17.1 | 18.5 |
| Ultimate elongation (%) | 389 | 369 | 397 | 400 | 371 | 399 |
| 300% Modulus, ring, (kPa) | 15.3 | 15.7 | 15 | 15.2 | 15 | 15.2 |
| Shore A hardness, hot, 100°C | 82 | 82 | 81 | 82 | 80 | 81 |
| Rebound, hot, 100°C | 49 | 48 | 49 | 49 | 50 | 49 |
| Tear strength², 95°C, (N) | 57 | 39 | 56 | 50 | 55 | 50 |
| | | | | | | |
| Wire Cord Adhesion (SWAT)³, (N) | | | | | | |
| Original, 23°C | 703 | 731 | 723 | 740 | 694 | 711 |
| Aged 10 days in water at 90°C | 678 | 693 | 582 | 659 | 620 | 659 |
| Aged 10 days in nitrogen at 120°C | 835 | 838 | 768 | 795 | 849 | 759 |

The tests were conducted in the manner of Table 2.

From Table 3 it can be seen that the original tack before aging has high values for all of the uncured rubber Samples in this study.

However, after aging, the uncured Control rubber Composition G exhibited a large decrease in tack performance, even after one day of aging in the air at 23°C.

Comparative uncured rubber Sample H containing the pentaerythritol also exhibited similar tack loss as Control rubber Sample G after aging in the air at 23°C.

However, it was discovered that all of the uncured soluble sulfur based Experimental rubber Samples I through L containing the pentaerythritol esters provided not only excellent original tack, similar to the control rubber Sample G, but exhibited superior tack performance after aging.

For the Experimental rubber Samples, it is observed that the mono-stearate ester (Experimental rubber Sample I) and the di-stearate ester, (Experimental rubber Sample J) exhibited the best tack retention after aging.

These results of the evaluation are considered as being significant in a sense that the Experimental rubber compositions (Experimental rubber Samples) of this study containing the pentaerythritol esters would predictively substantially maintain their original tack property over a longer period of time following their formation through subsequent rubber processing such as by, for example, calendering or extrusion process to form a tire component prior to building a resultant component into a tire assembly. This will beneficially allow more flexibility in the tire component preparation and the tire building process in the tire plant.

From Table 2 it can also be seen that most of the cured properties of the Experimental rubber Samples containing the pentaerythritol esters showed little change in significant rubber physical properties and that an inclusion of the penataerythritol itself gave no benefit in tack retention performance for the uncured rubber composition.

### EXAMPLE III - Use of Soluble Sulfur Curative

Rubber compositions (rubber Samples) were prepared to evaluate inclusion of pentaerythitol and pentaerythitol esters in a resin free rubber composition such as might be suitable for embedding a wire in the rubber composition, using soluble sulfur curative, to evaluate their effect on uncured rubber tack behavior, cured rubber physical properties and wire adhesion.

The rubber compositions were prepared by mixing natural cis 1,4-polyisoprene rubber with carbon black and silica in a first non-productive mixing step, or stage, (NP1) in an internal rubber mixer for 4 minutes to a temperature of 160°C. The resulting rubber mixtures were subsequently mixed in a second sequential non-productive mixing stage (NP2) to a temperature of 160°C with no additional ingredients being added. The rubber compositions were subsequently mixed in an internal rubber mixer with a sulfur cure package, namely insoluble sulfur and sulfur cure accelerator(s). The rubber compositions were allowed to cool to below 40°C between each individual mixing stage.

The basic formulation for the rubber Samples is illustrated in the following Table 4 and expressed in terms of parts by weight per hundred parts by weight rubber (phr) unless otherwise indicated.

**Table 4**

| Non-Productive Mixing Stage (NP1) | phr |
|---|---|
| Natural (cis 1,4-polyisoprene) rubber | 100 |
| Rubber reinforcing carbon black² | 35 |
| Precipitated silica³ | 15 |
| Zinc oxide | 8 |
| Fatty acid⁴ | 3 |
| Antidegradant(s) | 3 |
| Rubber processing oil | 1 |
| Cobalt salt ⁵ | 0.5 |
| Pentaerythitol | 0 and 1.5 |
| Pentaerythitol esters⁶ | 0 and 1.5 |
| | |
| Productive Mixing Stage (P) | |
| Soluble sulfur⁷ | 5.2 |
| Sulfur cure accelerator(s)⁸ | 1 |

| | |
|---|---|
| ²N347, an ASTM designation ³Precipitated silica as Zeosil Z1165 MP from Rhodia ⁴Fatty acid comprised of stearic, palmitic and oleic acids ⁵Cobalt naphthenate ⁶Pentaerythitol mono-, di-, tri-, and tetra- stearates ⁷Insoluble sulfur as Crystex from the Flexsys; soluble sulfur as rubber makers sulfur from Holly Industries ⁸Sulfur cure accelerator as sulfenamide | |

Various physical properties of the rubber compositions (Samples) are reported in the following Table 5.

**Table 5**

| | Samples | | | | | |
|---|---|---|---|---|---|---|
| | Control | Comparative | | Experimental | | |
| | M | N | O | P | Q | R |
| Soluble sulfur | 5.2 | 5.2 | 5.2 | 5.2 | 5.2 | 5.2 |
| Pentaerythitol | 0 | 1.5 | 0 | 0 | 0 | 0 |
| Pentaerythitol mono-stearate | 0 | 0 | 1.5 | 0 | 0 | 0 |
| Pentaerythitol di-stearate | 0 | 0 | 0 | 1.5 | 0 | 0 |
| Pentaerythitol tri-stearate | 0 | 0 | 0 | 0 | 1.5 | 0 |
| Pentaerythitol tetra-stearate | 0 | 0 | 0 | 0 | 0 | 1.5 |
| | | | | | | |
| Tack Strength¹, (N) | | | | | | |
| Original (23°C) | 18.3 | 19.9 | 19.9 | 19.1 | 17.7 | 18.6 |
| Aged 1 day in air at 23°C | 3.6 | 4.3 | 21.8 | 19.8 | 5.8 | 21.1 |
| Aged 3 days in air at 23°C | 3 | 3.7 | 12.3 | 21.2 | 5.4 | 5.6 |
| Aged 5 days in air at 23°C | 2.4 | 2.6 | 5.8 | 16.8 | 5.6 | 4.7 |
| | | | | | | |
| RPA | | | | | | |
| Uncured rubber composition storage modulus, (G') 100°C, 1 Hz, kPa | 188 | 232 | 217 | 206 | 207 | 226 |
| Cured rubber storage modulus (G'), 100°C, 10Hz, (kPa) G' at | | | | | | |
| 10% strain | 1783 | 2159 | 1861 | 1825 | 1913 | 2066 |
| Tan delta, 100°C, 10% strain | 0.122 | 0.125 | 0.126 | 0.125 | 0.130 | 0.129 |
| | | | | | | |
| Curing Information | | | | | | |
| Delta torque (dNm) | 22 | 27 | 23 | 23 | 23 | 24 |
| T90, minutes | 9.9 | 10.3 | 10.3 | 10.0 | 10.1 | 10.4 |
| | | | | | | |
| Physical Properties | | | | | | |
| Tensile strength (MPa | 16.4 | 16.3 | 14.7 | 16.5 | 16.6 | 14.8 |
| Ultimate elongation (%) | 370 | 315 | 324 | 375 | 360 | 319 |
| 100% modulus, ring, (kPa) | 2.8 | 3.7 | 3.1 | 2.8 | 3.1 | 3.3 |
| Shore A hardness, 100°C | 59 | 65 | 62 | 59 | 60 | 63 |
| Rebound, hot, 100°C | 56 | 56 | 56 | 54 | 55 | 55 |
| Tear strength², 95°C, (N) | 102 | 89 | 106 | 102 | 104 | 99 |
| | | | | | | |
| Wire Cord Adhesion (SWAT)³, (N) | | | | | | |
| Original, 23°C | 622 | 682 | 607 | 613 | 563 | 611 |
| Aged 10 days in water at 90°C | 242 | 467 | 224 | 248 | 252 | 293 |
| Aged 10 days in nitrogen at 120°C | 743 | 644 | 621 | 621 | 637 | 657 |

From Table 5 it can be seen that the original tack before aging had high values for all uncured rubber Samples of this study.

However, after aging, the uncured Control rubber Sample M exhibited a large decrease in tack performance, even after one day of aging in the air at 23°C.

Comparative rubber Sample N containing the pentaerythritol also exhibited similar tack loss as Control rubber Sample M after aging in the air at 23°C.

However, it was discovered that all of the uncured soluble sulfur based Experimental rubber Samples O through R containing the pentaerythritol esters provided not only excellent original tack, similar to the control rubber Sample A, but exhibited superior tack performance after aging.

For the Experimental rubber Samples, it is observed that the mono-stearate ester (Experimental rubber Sample O) and the di-stearate ester, (Experimental rubber Sample P) exhibited the best tack retention after aging.

These results are considered as being significant in a sense that the Experimental uncured soluble sulfur based rubber compositions (Experimental rubber Samples) of this study containing the pentaerythritol esters would predictively substantially maintain their original tack property over a longer period of time following their formation through subsequent rubber processing such as by, for example, calendering or extrusion process to form a tire component prior to building a resultant component into a tire assembly. This will beneficially allow more flexibility in the tire component preparation and the tire building process in the tire plant.

From Table 5 it can also be seen that most of the cured properties of the Experimental rubber Samples containing the pentaerythritol esters showed little change in significant rubber physical properties and that an inclusion of the penataerythritol itself gave no benefit in tack retention performance for the uncured rubber composition.

### EXAMPLE IV - Level of Ester using Insoluble Sulfur Curative

Rubber compositions (rubber Samples) were prepared in the manner of Example III, using insoluble sulfur curative to evaluate the effect of the level of pentaerythitol mono-stearate ester in the rubber composition on uncured rubber tack behavior, cured rubber physical properties and wire adhesion.

The basic formulation for the rubber Samples is illustrated in Table 4 of Example III except for the use of insoluble sulfur as a replacement for the soluble sulfur shown in Table 4.

Various physical properties of the rubber compositions (Samples) are reported in the following Table 6.

**Table 6**

| | Samples | | | |
|---|---|---|---|---|
| | Control | Experimental | | |
| | S | T | U | V |
| Insoluble sulfur | 6.5 | 6.5 | 6.5 | 6.5 |
| Pentaerythitol mono-stearate | 0 | 1 | 2 | 3 |
| | | | | |
| Tack Strength¹, (N) | | | | |
| Original (23°C) | 15.8 | 18.7 | 16 | 20.6 |
| Aged 1 day in air at 23°C | 6 | 5.9 | 16.7 | 16.8 |
| Aged 3 days in air at 23°C | 3.2 | 8.1 | 9.6 | 18.8 |
| | | | | |
| RPA | | | | |
| Uncured rubber composition storage modulus, (G') 100°C, 1 Hz, kPa | 244 | 252 | 240 | 233 |
| Cured rubber storage modulus (G'), 100°C, 10Hz (kPa) G' at 10% strain | 1957 | 1755 | 1749 | 1720 |
| Tan delta, 100°C, 10% strain | 0.134 | 0.133 | 0.131 | 0.132 |
| | | | | |
| Curing Information | | | | |
| Delta torque (dNm) | 23.1 | 20.6 | 21.0 | 20.8 |
| T90 (minutes) | 11.5 | 11 | 10.4 | 10.9 |
| | | | | |
| Physical Properties | | | | |
| Tensile strength (MPa) | 14.4 | 13.9 | 14.1 | 15.1 |
| Ultimate elongation (%) | 310 | 318 | 328 | 354 |
| 300% Modulus, ring, (kPa) | 15.7 | 14.7 | 14.3 | 13.9 |
| Shore A hardness, hot, 100°C | 64 | 63 | 62 | 61 |
| Rebound, hot, 100°C | 55 | 55 | 55 | 55 |
| Tear strength², 95°C, (N) | 90 | 109 | 111 | 117 |
| | | | | |
| Wire Cord Adhesion (SWAT)³, (N) | | | | |
| Original, 23°C | 550 | 641 | 588 | 664 |
| Aged 10 days in water at 90°C | 274 | 282 | 261 | 198 |
| Aged 10 days in nitrogen at 120°C | 642 | 630 | 627 | 647 |

The tests were conducted in the manner of Table 2.

From Table 6 it can be seen that the original tack before aging has high values for all of the uncured rubber Samples in this study.

However, after aging, the uncured Control rubber Composition S exhibited a large decrease in tack performance, even after one day of aging in the air at 23°C.

Experimental uncured insoluble sulfur based rubber Sample T containing 1 phr of the pentaerythritol mono-stearate ester shows a small improvement in tack retention when compared to the control after 3 days of aging, whereas experimental samples U and V, which contain 2 and 3 phr, respectively of the pentaerythritol mono-stearate, exhibit superior retention of tack, particularly sample V, which contains 3 phr of the ester. These results suggest a lower limit of at least 1 phr of the ester is desirable for better tack retention and use of up to 3 phr appears to be adequate for tack retention.

However, all of the uncured Experimental rubber Samples T, U and V, containing the pentaerythritol mono-stearate ester provided not only excellent original tack, similar to the control rubber Sample S, but also exhibited improved tack performance after aging.

These results are considered as being significant in a sense that the Experimental rubber compositions (Experimental rubber Samples) of this study containing the pentaerythritol mono-stearate ester would predictively substantially maintain their original tack property, particularly at a level of use of 2 phr or higher, over a longer period of time following their formation through subsequent rubber processing such as by, for example, calendering or extrusion process to form a tire component prior to building a resultant component into a tire assembly. This will beneficially allow more flexibility in the tire component preparation and the tire building process in the tire plant.

From Table 6 it can also be seen that most of the cured properties of the Experimental rubber Samples containing the pentaerythritol mono-stearate ester showed only small changes in significant rubber physical properties.

### EXAMPLE V - Level of Ester using Soluble Sulfur Curative

Rubber compositions (rubber Samples) were prepared in the manner of Example IV, except that soluble sulfur curative, instead of insoluble sulfur curative, was used, to evaluate the effect of the level of pentaerythitol mono-stearate ester in the rubber composition on uncured rubber tack behavior, cured rubber physical properties and wire adhesion.

The basic formulation for the rubber Samples is illustrated in Table 4 of Example III except for the use of various levels of the pentaerythitol mono-stearate ester.

Various physical properties of the rubber compositions (Samples) are reported in the following Table 7.

**Table 7**

| | Samples | | | |
|---|---|---|---|---|
| | Control | Experimental | | |
| | W | X | Y | Z |
| Soluble sulfur | 5.2 | 5.2 | 5.2 | 5.2 |
| Pentaerythitol mono-stearate | 0 | 1 | 2 | 3 |
| | | | | |
| Tack Strength¹, (N) | | | | |
| Original (23°C) | 18.1 | 18.9 | 17.7 | 17.2 |
| Aged 1 day in air at 23°C | 5.2 | 7.6 | 17.7 | 19.7 |
| Aged 3 days in air at 23°C | 4.1 | 10.3 | 22.8 | 23.6 |
| | | | | |
| RPA | | | | |
| Uncured rubber composition storage modulus, (G') 100°C, 1 Hz, kPa | 239 | 232 | 215 | 209 |
| Cured rubber storage modulus (G'), 100°C, 10Hz (kPa) G' at 10% strain | 1977 | 1865 | 1847 | 1753 |
| Tan delta, 100°C, 10% strain | 0.137 | 0.144 | 0.137 | 0.131 |
| | | | | |
| Curing Information | | | | |
| Delta torque (dNm) | 22.2 | 21.5 | 21.1 | 20.4 |
| T90 (minutes) | 10.1 | 11.2 | 10.2 | 11 |
| | | | | |
| Physical Properties | | | | |
| Tensile strength (MPa) | 16.6 | 16.4 | 15.5 | 15.7 |
| Ultimate elongation (%) | 351 | 356 | 345 | 358 |
| 300% Modulus, ring, (kPa) | 15.5 | 15.1 | 14.8 | 14.3 |
| Shore A hardness, hot, 100°C | 64 | 64 | 64 | 62 |
| Rebound, hot, 100°C | 54 | 54 | 54 | 54 |
| Tear strength², 95°C, (N) | 99 | 109 | 112 | 116 |
| | | | | |
| Wire Cord Adhesion (SWAT)³, (N) | | | | |
| Original, 23°C | 665 | 626 | 641 | 554 |
| Aged 10 days in water at 90°C | 315 | 326 | 268 | 236 |
| Aged 10 days in nitrogen at 120°C | 693 | 655 | 643 | 703 |

From Table 7 it can be seen that the original tack before aging has high values for all of the uncured soluble sulfur based rubber Samples in this study. However, after aging, the uncured Control rubber Composition W exhibited a large decrease in tack performance, even after one day of aging in the air at 23°C.

Experimental uncured, soluble sulfur based, rubber Sample X containing 1 phr of the pentaerythritol mono-stearate ester shows a small improvement in tack retention when compared to the control , whereas experimental samples Y and Z, which contain 2 and 3 phr, respectively of the pentaerythritol mono-stearate, exhibit superior retention of tack. These results suggest a lower limit of at least 1 phr is desirable for tack retention of the soluble sulfur based rubber composition and use of up to 2 to 3 phr appears to be adequate to retain tack after aging.

These results are considered as being significant in a sense that the Experimental rubber compositions (Experimental rubber Samples) of this study containing the pentaerythritol mono-stearate ester would predictively substantially maintain their original tack property, particularly at a level of use of 2 phr or higher, over a longer period of time following their formation through subsequent rubber processing such as by, for example, calendering or extrusion process to form a tire component prior to building a resultant component into a tire assembly. This will beneficially allow more flexibility in the tire component preparation and the tire building process in the tire plant.

From Table 7 it can also be seen that most of the cured properties of the Experimental rubber Samples containing the pentaerythritol mono-stearate ester showed only small changes in significant rubber physical properties.

## Claims

1. A wire embedded in a rubber composition, the rubber composition comprising, based on parts by weight per 100 parts by weight rubber (phr):
(A) at least one diene based elastomer comprising at least one of natural cis 1,4-polyisoprene rubber and synthetic rubber derived from one or more diene hydrocarbon monomers, and mixtures thereof;
(B) 0.1 to 10 phr of sulfur comprising at least one of insoluble and soluble sulfur, and
(C) 1 to 10 phr of pentaerythritol ester of carboxylic acid comprising at least one of stearic, palmitic, butyric, lauric, oleic and lineolic acids.

2. The wire embedded in a rubber composition of claim 1 comprising 2 to 8 phr of said sulfur comprising at least one of insoluble and soluble sulfur.

3. The wire embedded in a rubber composition of claim 1 or 2 comprising 0.5 to 3 phr of said pentaerythritol ester of carboxylic acid comprising at least one of stearic, palmitic, butyric, lauric, oleic and lineolic acids.

4. The wire embedded in a rubber composition of claim 1, further comprising a reinforcing filler comprising:
(1) silica or precipitated silica, or
(2) carbon black, or
(3) a combination of silica or precipitated silica and carbon black containing up to 95 weight percent silica.

5. The wire embedded in a rubber composition of claim 1 or 4 wherein the sulfur comprises insoluble and soluble sulfur.

6. The wire embedded in a rubber composition of claim 5 wherein the ratio of insoluble sulfur to soluble sulfur is in a range of from 10/90 to 90/10.

7. The wire embedded in a rubber composition of at least one of the previous claims wherein the pentaerythritol ester contains less than 10 percent pentaerythritol.

8. The wire embedded in a rubber composition of at least one of the previous claims wherein said diene-based elastomer is exclusive of isobutylene/diene copolymers.

9. The wire embedded in a rubber composition of at least one of the previous claims wherein the diene-based elastomer(s) comprise polymers of at least one of isoprene and 1,3-butadiene and copolymers of styrene and at least one of isoprene and 1,3-butadiene.

10. The wire embedded in a rubber composition of at least one of the previous claims wherein the reinforcing filler is or comprises precipitated silica together with a silica coupling agent having a moiety reactive with hydroxyl groups on the silica and another different moiety interactive with the diene-based elastomer(s).

11. The wire embedded in a rubber composition of at least one of the previous claims wherein the reinforcing filler is or comprises a combination of rubber reinforcing carbon black and precipitated silica together with a silica coupling agent having a moiety reactive with hydroxyl groups on the silica and another different moiety interactive with the diene-based elastomer(s).

12. The wire embedded in a rubber composition of at least one of the previous claims wherein the pentaerythritol ester is or comprises at least one of pentaerythritol mono-stearate, pentaerythritol di-stearate, pentaerythritol tri-stearate and pentaerythritol tetra-stearate.

13. The wire embedded in a rubber composition of at least one of the previous claims wherein the wire is a steel wire.

14. The wire embedded in a rubber composition of at least one of the previous claims wherein the wire is a brass coated steel wire.

15. A tire having a component comprising the wire embedded in a rubber composition in accordance with at least one of the claims 1 to 14.

## Patentansprüche

1. Draht, eingebettet in eine Kautschukzusammensetzung, wobei die Kautschukzusammensetzung, auf Basis von Gewichtsteilen je 100 Gewichtsteile Kautschuk (phr), umfasst:
(A) mindestens ein dienbasiertes Elastomer, umfassend mindestens eines von cis-1,4-Polyisopren-Naturkautschuk und Synthesekautschuk, abgeleitet von einem oder mehreren Dien-Kohlenwasserstoffmonomeren, und Mischungen davon;
(B) 0,1 bis 10 phr Schwefel, umfassend mindestens eines von unlöslichem und löslichem Schwefel, und
(C) 1 bis 10 phr Pentaerythrit-Ester von Carbonsäure, umfassend mindestens eines von Stearin-, Palmitin-, Butter-, Laurin-, Öl- und Linolsäuren.

2. Draht, eingebettet in eine Kautschukzusammensetzung nach Anspruch 1, umfassend 2 bis 8 phr besagten Schwefels, umfassend mindestens eines von unlöslichem und löslichem Schwefel.

3. Draht, eingebettet in eine Kautschukzusammensetzung nach Anspruch 1 oder 2, umfassend 0,5 bis 3 phr besagten Pentaerythrit-Esters von Carbonsäure, umfassend mindestens eines von Stearin-, Palmitin-, Butter-, Laurin-, Öl- und Linolsäuren.

4. Draht, eingebettet in eine Kautschukzusammensetzung nach Anspruch 1, weiter einen Verstärkungsfüllstoff umfassend, umfassend:
(1) Silika oder ausgefälltes Silika, oder
(2) Carbon Black, oder
(3) eine Kombination von Silika oder ausgefälltem Silika und Carbon Black, welche mindestens 95 Gewichtsprozent Silika enthält.

5. Draht, eingebettet in eine Kautschukzusammensetzung nach Anspruch 1 oder 4, wobei der Schwefel unlöslichen und löslichen Schwefel umfasst.

6. Draht, eingebettet in eine Kautschukzusammensetzung nach Anspruch 5, wobei das Verhältnis von unlöslichem Schwefel zu löslichem Schwefel im Bereich von 10:90 bis 90:10 liegt.

7. Draht, eingebettet in eine Kautschukzusammensetzung nach mindestens einem der vorhergehenden Ansprüche, wobei der Pentaerythrit-Ester weniger als 10 Prozent Pentaerythrit enthält.

8. Draht, eingebettet in eine Kautschukzusammensetzung nach mindestens einem der vorhergehenden Ansprüche, wobei das dienbasierte Elastomer unter Ausschluss von Isobutylen-Dien-Copolymeren ist.

9. Draht, eingebettet in eine Kautschukzusammensetzung nach mindestens einem der vorhergehenden Ansprüche, wobei das bzw. die dienbasierte(n) Elastomer(e) Polymere von mindestens einem von Isopren und 1,3-Butadien und Copolymere von Styrol und mindestens einem von Isopren und 1,3-Butadien umfassen.

10. Draht, eingebettet in eine Kautschukzusammensetzung nach mindestens einem der vorhergehenden Ansprüche, wobei der Verstärkungsfüllstoff ausgefälltes Silika ist oder umfasst, zusammen mit einem Silika-Haftmittel, das einen Anteil, der mit Hydroxylgruppen an dem Silika reaktiv ist, und einen anderen, verschiedenen Anteil, der mit dem bzw. den dienbasierten Elastomer(en) in Wechselwirkung tritt, aufweist.

11. Draht, eingebettet in eine Kautschukzusammensetzung nach mindestens einem der vorhergehenden Ansprüche, wobei der Verstärkungsfüllstoff eine Kombination von Verstärkungs-Carbon Black und ausgefälltem Silika ist oder umfasst, zusammen mit einem Silika-Haftmittel, das einen Anteil, der mit Hydroxylgruppen an dem Silika reaktiv ist, und einen anderen, verschiedenen Anteil, der mit dem bzw. den dienbasierten Elastomer(en) in Wechselwirkung tritt, aufweist.

12. Draht, eingebettet in eine Kautschukzusammensetzung nach mindestens einem der vorhergehenden Ansprüche, wobei der Pentaerythrit-Ester mindestens eines von Pentaerythrit-Monostearat, Pentaerythrit-Distearat, Pentaerythrit-Tristearat und Pentaerythrit-Tetrastearat ist oder umfasst.

13. Draht, eingebettet in eine Kautschukzusammensetzung nach mindestens einem der vorhergehenden Ansprüche, wobei der Draht ein Stahldraht ist.

14. Draht, eingebettet in eine Kautschukzusammensetzung nach mindestens einem der vorhergehenden Ansprüche, wobei der Draht ein messingbeschichteter Stahldraht ist.

15. Reifen mit einem Bauteil, umfassend den Draht, eingebettet in eine Kautschukzusammensetzung gemäß mindestens einem der Ansprüche 1 bis 14.

## Revendications

1. Fil métallique enrobé d'une composition de caoutchouc, la composition de caoutchouc comprenant, en se basant sur des parties en poids par 100 parties en poids de caoutchouc (phr) :
(A) au moins un élastomère à base diénique comprenant au moins un caoutchouc choisi parmi le caoutchouc naturel de cis 1-4 polyisoprène et un caoutchouc synthétique qui dérive d'un ou de plusieurs monomères d'hydrocarbures diéniques, ainsi que leurs mélanges ;
(B) de 0,1 à 10 phr de soufre comprenant au moins un élément choisi parmi du soufre insoluble et du soufre soluble ; et
(C) de 1 à 10 phr d'un ester de pentaérythritol d'un acide carboxylique comprenant au moins un acide choisi parmi l'acide stéarique, l'acide palmitique, l'acide butyrique, l'acide laurique, l'acide oléique et l'acide linoléique.

2. Fil métallique enrobé d'une composition de caoutchouc selon la revendication 1, comprenant de 2 à 8 phr dudit soufre comprenant au moins un élément choisi parmi du soufre insoluble et du soufre soluble.

3. Fil métallique enrobé d'une composition de caoutchouc selon la revendication 1 ou 2, comprenant de 0,5 à 3 phr dudit au moins un acide choisi parmi l'acide stéarique, l'acide palmitique, l'acide butyrique, l'acide laurique, l'acide oléique et l'acide linoléique.

4. Fil métallique enrobé d'une composition de caoutchouc selon la revendication 1, comprenant en outre une matière de charge faisant office renforcement comprenant :
(1) de la silice ou de la silice précipitée ; ou
(2) du noir de carbone ; ou
(3) une combinaison de silice ou de silice précipitée et de noir de carbone contenant de la silice jusqu'à concurrence de 95 % en poids.

5. Fil métallique enrobé d'une composition de caoutchouc selon la revendication 1 ou 4, dans lequel le soufre comprend du soufre insoluble et du soufre soluble.

6. Fil métallique enrobé d'une composition de caoutchouc selon la revendication 5, dans lequel le rapport du soufre insoluble au soufre soluble se situe dans la plage de 10/90 à 90/10.

7. Fil métallique enrobé d'une composition de caoutchouc selon au moins une des revendications précédentes, dans lequel l'ester de pentaérythritol contient moins de 10 % de pain pentaérythritol.

8. Fil métallique enrobé d'une composition de caoutchouc selon au moins une des revendications précédentes, dans lequel, en ce qui concerne ledit élastomère à base diénique, sont exclus des copolymères d'isobutylène/diène.

9. Fil métallique enrobé d'une composition de caoutchouc selon au moins une des revendications précédentes, dans lequel le ou les élastomères à base diénique comprennent des polymères d'au moins un polymère choisi parmi l'isoprène et le 1,3-butadiène et des copolymères de styrène et d'au moins un polymère choisi parmi l'isoprène et le 1,3-butadiène et des copolymères de styrène.

10. Fil métallique enrobé d'une composition de caoutchouc selon au moins une des revendications précédentes, dans lequel la matière de charge faisant office de renforcement représente ou comprend de la silice précipitée de manière conjointe avec un agent de couplage de la silice possédant une fraction apte à réagir avec des groupes hydroxyle sur la silice et une autre fraction différente qui entre en interaction avec l'élastomère ou les élastomères à base diénique.

11. Fil métallique enrobé d'une composition de caoutchouc selon au moins une des revendications précédentes, dans lequel la matière de charge faisant office de renforcement représente ou comprend une combinaison de noir de carbone pour le renforcement du caoutchouc et de la silice précipitée de manière conjointe avec un agent de couplage de la silice possédant une fraction apte à réagir avec des groupes hydroxyle sur la silice et une autre fraction différente qui entre en interaction avec l'élastomère ou les élastomères à base diénique.

12. Fil métallique enrobé d'une composition de caoutchouc selon au moins une des revendications précédentes, dans lequel l'ester de pentaérythritol représente ou comprend au moins un membre choisi parmi le groupe comprenant du monostéarate de pentaérythritol, du distéarate de pentaérythritol, du tristéarate de pentaérythritol et du tétrastéarate de pentaérythritol.

13. Fil métallique enrobé d'une composition de caoutchouc selon au moins une des revendications précédentes, dans lequel le fil métallique est un fil métallique en acier.

14. Fil métallique enrobé d'une composition de caoutchouc selon au moins une des revendications précédentes, dans lequel le fil métallique est un fil métallique en acier revêtu de laiton.

15. Bandage pneumatique possédant un composant comprenant le fil métallique enrobé d'une composition de caoutchouc selon au moins une des revendications 1 à 14.
